# EUROPÄISCHE PATENTANMELDUNG

(11) **EP 1 462 288 A1**
(43) Veröffentlichungstag der Anmeldung: **29.09.2004**
(21) Anmeldenummer: 04100503.4
(22) Anmeldetag: 11.02.2004
(51) Int. Cl.: B60K 15/03

(54) **Fördereinrichtung**

(30) Priorität: 28.03.2003 DE 10314223
(71) Anmelder: SIEMENS AKTIENGESELLSCHAFT, 80333 München (DE)
(72) Erfinder: Rumpf, Bernd, 61130, Nidderau (DE)

(57) **Zusammenfassung**

Bei einer Fördereinrichtung (2) für ein Kraftfahrzeug ist in einer in einen vor einem Schwalltopf (3) angeordneten Zwischenbehälter (8) geführten Förderleitung (7) ein Belüftungselement (10) angeordnet. Das Belüftungselement (10) hat eine bei einer Strömung des Kraftstoffs verschlossene und bei ausbleibender Strömung freigegebene Öffnung (11). Damit wird ein Leerlaufen des Zwischenbehälters (8) durch einen Siphon-Effekt vermieden.

## Beschreibung

Die Erfindung betrifft eine Fördereinrichtung für ein Kraftfahrzeug mit einem zur Anordnung in einem Kraftstoffbehälter vorgesehenen Schwalltopf, mit einer Befülleinrichtung des Schwalltopfes, mit einer außerhalb des Schwalltopfes angeordneten Saugstrahlpumpe zur Förderung von Kraftstoff über eine Förderleitung in den Schwalltopf oder in einen mit dem Schwalltopf verbundenen Zwischenbehälter und mit einem vertikal nach unten in den Zwischenbehälter oder den Schwalltopf geführten Abschnitt der Förderleitung.

Solche Fördereinrichtungen werden in heutigen Kraftstoffbehältern häufig eingesetzt und sind aus der Praxis bekannt. Die Förderleitung ist zur Vermeidung eines Aufschäumens des Kraftstoffs unmittelbar in den Zwischenbehälter oder den Schwalltopf geführt. Bei einer Unterbrechung der Strömung des Kraftstoffs, beispielsweise bei abgeschalteter Saugstrahlpumpe muss verhindert werden, dass Kraftstoff aus dem Zwischenbehälter oder dem Schwalltopf über die Förderleitung durch einen Siphon-Effekt abgesaugt wird. Das Ventil könnte beispielsweise als Rückschlagventil ausgebildet sein und ausschließlich eine Strömung von Kraftstoff in einer Richtung der Förderleitung zulassen. Dies erfordert jedoch einen in der Förderleitung angeordneten und damit der Strömung des Kraftstoffs einen Widerstand entgegensetzenden Ventilkörper.

Der Erfindung liegt das Problem zugrunde, eine Fördereinrichtung der eingangs genannten Art so weiterzubilden, dass ein Absaugen von Kraftstoff aus dem Zwischenbehälter oder dem Schwalltopf zuverlässig vermieden wird und dass die Strömung in der Förderleitung einen besonders geringen Strömungswiderstand hat.

Dieses Problem wird erfindungsgemäß dadurch gelöst, dass im Bereich der höchsten Stelle der Förderleitung ein Belüftungselement angeordnet ist und dass das Belüftungselement zur Freigabe einer Öffnung bei ausbleibender Strömung des Kraftstoffs ausgebildet ist.

Durch diese Gestaltung gelangt bei ausbleibender Strömung über das Belüftungselement Luft in die Förderleitung und unterbricht den Siphon-Effekt. Damit wird verhindert dass bei abgeschalteter Saugstrahlpumpe der Kraftstoff aus dem Zwischenbehälter oder dem Schwalltopf abgesaugt wird. Ein in der Strömung der Förderleitung angeordneter Ventilkörper lässt sich dank der Erfindung vermeiden, so dass die Förderleitung einen besonders geringen Strömungswiderstand hat.

Die Steuerung des Belüftungselementes gestaltet sich gemäß einer vorteilhaften Weiterbildung der Erfindung besonders einfach, wenn das Belüftungselement einen von dem Druck des Kraftstoffs in der Förderleitung beweglichen, in einer ersten Stellung die Öffnung in der Förderleitung überdeckenden und in einer zweiten Stellung die Öffnung freigebenden Schließkörper hat. Da die Stellung des Schließkörpers von dem Druck in der Förderleitung gesteuert wird, wird die Strömung des Kraftstoffs nicht behindert.

Die Halterung und Führung des Schließkörpers erfordert gemäß einer anderen vorteilhaften Weiterbildung der Erfindung einen besonders geringen baulichen Aufwand, wenn der Schließkörper einen eine Wandung der Förderleitung durchdringenden Bolzen hat und wenn der Bolzen an seinem freien Ende eine in der ersten Stellung einen Abstand zu der Wandung der Förderleitung aufweisende Verbreiterung hat.

Zur weiteren Verringerung des baulichen Aufwandes der Halterung des Schließkörpers trägt es gemäß einer anderen vorteilhaften Weiterbildung der Erfindung bei, wenn die Schließkörper über ein gasdichtes Scharnier mit einer Wandung der Förderleitung verbunden sind.

Zur weiteren Verringerung des Widerstandes in der Strömung der Förderleitung trägt es gemäß einer anderen vorteilhaften Weiterbildung der Erfindung bei, wenn das Belüftungselement einen die Öffnung in der Wandung der Förderleitung verschließenden Schwimmer hat.

Das Belüftungselement lässt sich gemäß einer anderen vorteilhaften Weiterbildung der Erfindung besonders kostengünstig fertigen, wenn der Schließkörper als steifes Wandelement ausgebildet ist.

Die Strömung in der Förderleitung vermag den Schließkörper gemäß einer anderen vorteilhaften Weiterbildung der Erfindung unmittelbar gegen die Öffnung zu drücken, wenn der Schließkörper als elastische Membran ausgebildet ist.

Ein beweglicher Schließkörper lässt sich gemäß einer anderen vorteilhaften Weiterbildung der Erfindung einfach vermeiden, wenn das Belüftungselement ein nach oben offenes Rohr aufweist und wenn das Rohr länger ist als eine bei nahezu leerem Kraftstoffbehälter von dem Druck der Saugstrahlpumpe erzeugbare Säule an Kraftstoff und/oder wenn die Öffnung als Drosselöffnung ausgebildet ist. Durch diese Gestaltung wird das Rohr bei einem Betrieb der Saugstrahlpumpe in einer Höhe mit Kraftstoff befüllt, die dem maximal erzeugbaren Druck der Saugstrahlpumpe entspricht. Beim Abschalten der Saugstrahlpumpe dringt durch das nach oben offene Ende des Rohres Luft in das Rohr und anschließend in die Förderleitung ein.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: schematisch einen Kraftstoffbehälter mit einer erfindungsgemäßen Fördereinrichtung,
- Fig.2: ein Belüftungselement der Fördereinrichtung aus Figur 1,
- Fig.3: eine weitere Ausführungsform des Belüftungselementes der Fördereinrichtung aus Figur 1 mit einer Klappe,
- Fig.4: eine weitere Ausführungsform des Belüftungselementes mit einer Membran,
- Fig.5: eine weitere Ausführungsform des Belüftungselementes mit einem offenen Rohr.

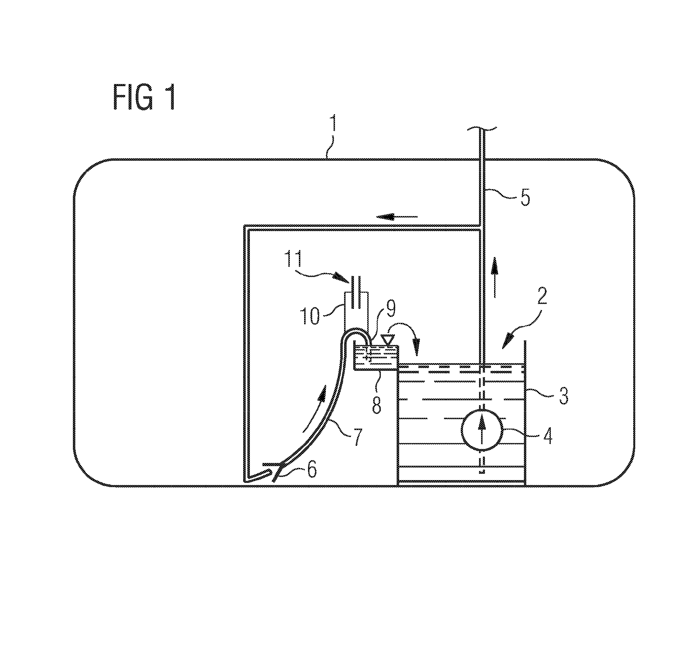

Figur 1 zeigt einen Kraftstoffbehälter 1 eines Kraftfahrzeuges mit einer Fördereinrichtung 2 zum Fördern von Kraftstoff zu einer nicht dargestellten Brennkraftmaschine. Die Fördereinrichtung 2 hat eine in einem Schwalltopf 3 angeordnete, elektromotorisch angetriebene Kraftstoffpumpe 4. Die Kraftstoffpumpe 4 fördert Kraftstoff aus dem Schwalltopf 3 über eine Vorlaufleitung 5 zu der Brennkraftmaschine und zu einer Saugstrahlpumpe 6. Die Saugstrahlpumpe 6 fördert Kraftstoff aus dem Kraftstoffbehälter 1 über eine Förderleitung 7 in einen mit dem Schwalltopf 3 verbundenen Zwischenbehälter 8. Von dem Zwischenbehälter 8 gelangt der Kraftstoff in den Schwalltopf 3. Zur Verdeutlichung sind die Strömungen des Kraftstoffs in der Zeichnung mit Pfeilen gekennzeichnet. Die Förderleitung 7 weist einen vertikal nach unten geführten Abschnitt 9 auf, mit dem sie in den Zwischenbehälter 8 eindringt. Im Bereich ihrer höchsten Stelle hat die Förderleitung 7 ein Belüftungselement 10 mit einer Öffnung 11. Bei einem Betrieb der Kraftstoffpumpe 4 fördert die Saugstrahlpumpe 6 Kraftstoff durch die Förderleitung 7. Wenn die Kraftstoffpumpe 4 abgeschaltet wird, gelangt Luft über die Öffnung 11 des Belüftungselementes 10 in die Förderleitung 7 und verhindert, dass der Zwischenbehälter 8 durch einen Siphon-Effekt leerläuft.

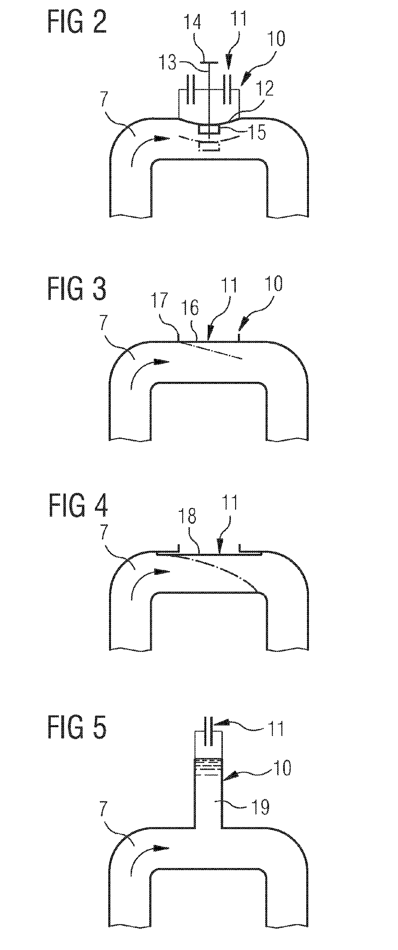

Figur 2 zeigt stark vergrößert das Belüftungselement 10 aus 10 Figur 1 mit angrenzenden Bereichen der Förderleitung 7. Das Belüftungselement 10 hat einen die Öffnung 11 überdeckenden Schließkörper 12. In dieser Stellung ist die Öffnung 11 verschlossen, so dass keine Luft in die Förderleitung 7 eindringt und kein Kraftstoff über die Öffnung 11 entweichen kann. Strichpunktiert ist in Figur 2 die Stellung des Schließkörpers 12 bei abgeschalteter Saugstrahlpumpe 6 dargestellt. Hierbei ist zu erkennen, dass der Schließkörper 12 durch die Schwerkraft nach unten bewegt wurde und damit die Öffnung 11 von dem Schließkörper 12 freigegeben ist. Damit kann Luft in die Förderleitung 7 eindringen. Der Schließkörper 12 hat einen die Wandung der Förderleitung 7 durchdringenden Bolzen 13 als Führung, an dessen Ende eine Verbreiterung 14 angeordnet ist. Weiterhin ist der Schließkörper 12 mit einem Schwimmer 15 verbunden. Bei einer Strömung des Kraftstoffs in der Förderleitung 7 unterstützt der Schwimmer 15 die Bewegung des Schließkörpers 12.

Figur 3 zeigt eine weitere Ausführungsform des Belüftungselementes 10, bei dem ein Schließkörper 16 als Klappe ausgebildet und über ein als Filmscharnier ausgebildetes Scharnier 17 mit der Wandung der Förderleitung 7 verbunden ist. In der dargestellten Stellung verschließt der Schließkörper 16 die Öffnung 11 in der Wandung der Förderleitung 7. Zur Verdeutlichung ist strichpunktiert die Stellung des Schließkörpers 16 bei abgeschalteter Saugstrahlpumpe 6 dargestellt.

Figur 4 zeigt eine weitere Ausführungsform des Belüftungselementes 10, bei dem ein Schließkörper 18 als die Öffnung 11 verdeckende Membran ausgebildet ist. Die Membran wird von der Strömung des Kraftstoffs gegen die Innenseite der Wandung der Förderleitung 7 gedrückt und verschließt damit die Öffnung 11. Bei ausbleibender Strömung biegt sich die elastische Membran nach unten und gibt die Öffnung 11 frei.

Figur 5 zeigt eine weitere Ausführungsform des Belüftungselementes 10 aus Figur 1, bei dem die Öffnung 11 an dem freien Ende eines Rohres 19 angeordnet ist. Das Rohr 19 ist länger als die bei nahezu leerem Kraftstoffbehälter 1 durch den Druck von der Kraftstoffpumpe 4 aus Figur 1 erzeugbare Säule an Kraftstoff. Weiterhin ist die Öffnung 11 als Drosselöffnung ausgebildet und setzt damit einer möglichen Strömung an Kraftstoff einen Widerstand entgegen. Luft kann jedoch nahezu ungehindert die Öffnung 11 passieren.

## Patentansprüche

1. Fördereinrichtung für ein Kraftfahrzeug mit einem zur Anordnung in einem Kraftstoffbehälter vorgesehenen Schwalltopf, mit einer Befülleinrichtung des Schwalltopfes, mit einer außerhalb des Schwalltopfes angeordneten Saugstrahlpumpe zur Förderung von Kraftstoff über eine Förderleitung in den Schwalltopf oder in einen mit dem Schwalltopf verbundenen Zwischenbehälter und mit einem vertikal nach unten in den Zwischenbehälter oder den Schwalltopf geführten Abschnitt der Förderleitung, **dadurch gekennzeichnet, dass** im Bereich der höchsten Stelle der Förderleitung (7) ein Belüftungselement (10) angeordnet ist und dass das Belüftungselement (10) zur Freigabe einer Öffnung (11) bei ausbleibender Strömung des Kraftstoffs ausgebildet ist.

2. Fördereinrichtung nach Anspruch 1, **dadurch gekennzeichnet, dass** das Belüftungselement (10) einen von dem Druck des Kraftstoffs in der Förderleitung (7) beweglichen, in einer ersten Stellung die Öffnung (11) in der Förderleitung (7) überdeckenden und in einer zweiten Stellung die Öffnung (11) freigebenden Schließkörper (12, 16, 18) hat.

3. Fördereinrichtung nach Anspruch 1 oder 2, **dadurch gekennzeichnet, dass** der Schließkörper (12) einen eine Wandung der Förderleitung (7) durchdringenden Bolzen (13) hat und dass der Bolzen (13) an seinem freien Ende eine in der ersten Stellung einen Abstand zu der Wandung der Förderleitung (7) aufweisende Verbreiterung (14) hat.

4. Fördereinrichtung nach zumindest einem der vorhergehenden Ansprüche, **dadurch gekennzeichnet, dass** die Schließkörper (16) über ein gasdichtes Scharnier (17) mit einer Wandung der Förderleitung (7) verbunden sind.

5. Fördereinrichtung nach zumindest einem der vorhergehenden Ansprüche, **dadurch gekennzeichnet, dass** das Belüftungselement (10) einen die Öffnung (11) in der Wandung der Förderleitung (7) verschließenden Schwimmer (15) hat.

6. Fördereinrichtung nach zumindest einem der vorhergehenden Ansprüche, **dadurch gekennzeichnet, dass** der Schließkörper (12, 16) als steifes Wandelement ausgebildet ist.

7. Fördereinrichtung nach zumindest einem der vorhergehenden Ansprüche, **dadurch gekennzeichnet, dass** der Schließkörper (18) als elastische Membran ausgebildet ist.

8. Fördereinrichtung nach zumindest einem der vorhergehenden Ansprüche, **dadurch gekennzeichnet, dass** das Belüftungselement (10) ein nach oben offenes Rohr (19) aufweist und dass das Rohr (19) länger ist als eine bei nahezu leerem Kraftstoffbehälter (1) von dem Druck der Saugstrahlpumpe (6) erzeugbare Säule an Kraftstoff und/oder dass die Öffnung (11) als Drosselöffnung ausgebildet ist.
